# EUROPÄISCHE PATENTSCHRIFT

(11) **EP 1 646 542 B1**
(45) Veröffentlichungstag und Bekanntmachung des Hinweises auf die Patenterteilung: **22.08.2007**
(21) Anmeldenummer: 04766182.2
(22) Anmeldetag: 09.07.2004
(51) Int. Cl.: B60T 8/40, B60T 13/14

(54) **ELEKTROHYDRAULISCHE BREMSANLAGE FÜR KRAFTFAHRZEUGE**
ELECTROHYDRAULIC BRAKE SYSTEM FOR MOTOR VEHICLES
SYSTEME DE FREINAGE ELECTROHYDRAULIQUE D'UN VEHICULE AUTOMOBILE

(30) Priorität: 09.07.2003 DE 10330977; 04.10.2003 DE 10346117
(43) Veröffentlichungstag der Anmeldung: 19.04.2006
(73) Patentinhaber: Continental Teves AG & Co. oHG, 60488 Frankfurt am Main (DE)
(72) Erfinder: DRUMM, Stefan, A., 55291 Saulheim (DE)
(86) Internationale Anmeldenummer: PCT/EP2004/051446
(87) Internationale Veröffentlichungsnummer: WO 2005/005214

(56) Entgegenhaltungen:
- EP-A- 1 078 833
- DE-A- 2 241 500
- DE-A- 3 420 688

## Beschreibung

Die Erfindung betrifft eine elektrohydraulische Bremsanlage für Kraftfahrzeuge, die in einer Betriebsart "Brake-by-Wire" betrieben werden kann, mit einem Hauptzylinder, an den Radbremszylinder anschließbar sind, einem ersten Kolben, der mit einem Bremspedal gekoppelt ist, einem zweiten Kolben, der den Hauptzylinder betätigt, einem dritten Kolben, der vom ersten Kolben betätigbar ist, wobei zwischen dem ersten und dem dritten Kolben mindestens eine eine Simulatorkraft ausübende Bremspedalcharakteristiksimulationseinrichtung vorgesehen ist, die in der by-Wire-Betriebsart dem Fahrzeugführer ein komfortables Pedalgefühl vermittelt, und alle drei KoJben sowie die wegsimulatoreinrichtung in einem Gehäuse angeordnet sind, einer hydraulischen Druckquelle, sowie einer durch den dritten Kolben betätigbaren Ventileinrichtung zum Reduzieren des Drucks der Druckquelle auf einen Wert, mit dem der zweite Kolben beaufschlagbar ist, wobei der zweite und der dritte Kolben durch einen Zwischenraum derart voneinander getrennt sind, dass der dritte Kolben durch den den zweiten Kolben beaufschlagenden Druck in der der Beaufschlagungsrichtung des zweiten Kolbens entgegen gesetzten Richtung beaufschlagt wird.

In der Kraftfahrzeugtechnik finden Brake-by-Wire-Bremssysteme eine immer größere Verbreitung. Bei diesen Bremssystemen kann die Bremse auch ohne aktives Zutun des Fahrers aufgrund elektronischer Signale "fremd-"betätigt werden. Diese elektronischen Signale können beispielsweise von einem elektronischen Stabilitätsprogramm ESP oder einem Abstandsregelsystem ACC ausgegeben werden. Kommt es zu einer Überlagerung einer derartigen Fremdbetätigung mit einer Fahrerbetätigung, so spürt der Fahrer des Kraftfahrzeugs eine Rückwirkung im Bremspedal. Dieser Rückwirkungseffekt auf das Bremspedal kann für den Fahrer ungewohnt und unangenehm sein, so dass der Fahrer in einer kritischen Situation des Straßenverkehrs das Bremspedal nicht so stark betätigt wie es in dieser Situation notwendig wäre, da er durch die von der Fremdbetätigung der Bremse verursachte Rückwirkung auf das Bremspedal irritiert wird.

Die EP 1 078 833 A1 beschreibt eine elektrohydraulische Bremsanlage der eingangs genannten Gattung. Die Ventileinrichtung zum Reduzieren des Drucks der Druckquelle ist bei der vorbekannten Bremsanlage als ein mittels eines Kipphebels mechanisch betätigbares Schieberventil ausgebildet, dessen Schieber in einer im Gehäuse vorgesehenen Bohrung verschiebbar geführt ist. Um sowohl den Schieber als auch eine ihn vorspannende Druckfeder einzubauen ist die Bohrung zur Atmosphäre hin offen ausgeführt, so dass in diesem Bereich eine Leckagegefahr entsteht, die eine Verunreinigung des Fahrzeuginnenraums verursachen kann.

Es ist daher Aufgabe der vorliegenden Erfindung, eine Bremsanlage der eingangs genannten Gattung anzugeben, bei der die vorhin erwähnte Gefahr der Leckage in den Innenraum des Fahrzeuges weitgehendst eliminiert wird. Außerdem soll die Bremsanlage einen einfachen Aufbau aufweisen und kostengünstig herstellbar sein.

Diese Aufgabe wird erfindungsgemäß dadurch gelöst, dass beide Stirnflächen eines Ventilkörpers der Ventileinrichtung der Wirkung des im Zwischenraum herrschenden Druckes ausgesetzt sind.

Vorteilhafte Weiterbildungen der Erfindung sind in den Unteransprüchen 2 - 36 aufgeführt.

Im Folgenden werden Beispiele der Ausführungsformen der Erfindung unter Bezugnahme auf die beiliegenden schematischen Zeichnungen näher erläutert. Es zeigen:
- Fig. 1: den Aufbau der erfindungsgemäßen Bremsanlage gemäß einer ersten Ausführungsform im Ruhezustand,
- Fig. 2: die erfindungsgemäße Bremsanlage gemäß Fig. 1 während einer Druckhaltephase einer unabhängig vom Fahrerwillen eingeleiteten "Fremd"-Bremsung,
- Fig. 3: die erfindungsgemäße Bremsanlage gemäß Fig. 1 während einer Druckhaltephase einer bevorzugten "Brake-by-wire"-Bremsung,
- Fig. 4: die erfindungsgemäße Bremsanlage gemäß Fig. 1 während eines Ausfalls der elektrischen Stromversorgung bzw. in der sog. hydraulischen Rückfallebene,
- Fig. 5: die erfindungsgemäße Bremsanlage gemäß Fig. 1 während eines Ausfalls der Druckquelle bzw. in der sog. mechanischen Rückfallebene,
- Fig. 6: den Aufbau einer zweiten erfindungsgemäßen Ausführungsform der Bremsanlage im Ruhezustand,
- Fig. 7: eine dritte erfindungsgemäße Ausführungsform der Bremsanlage im Ruhezustand und
- Fig. 8: eine vierte erfindungsgemäße Ausführungsform der Bremsanlage im Ruhezustand.

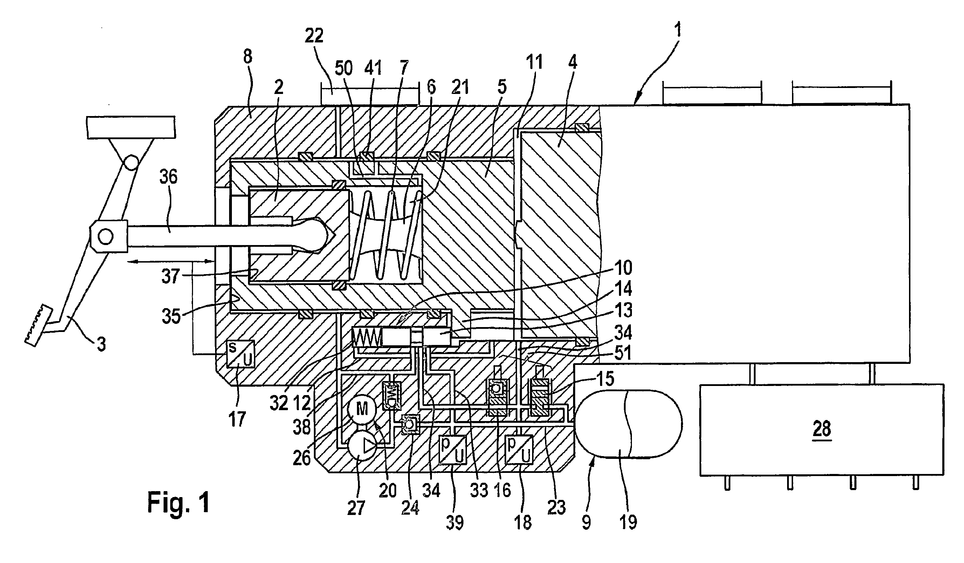

Figur 1 zeigt die erfindungsgemäße Bremsanlage im Ruhezustand. Die Bremsanlage weist ein Bremspedal 3 auf, das über eine Betätigungsstange 36 mit einem ersten Kolben 2 fest verbunden ist. Der Bremspedalweg kann mittels eines Wegsensors 17 erfasst werden. Der erste Kolben 2 ist in einem dritten Kolben 5 angeordnet, wobei zwischen dem ersten und dem dritten Kolben eine hydraulische Kammer 21 angeordnet ist, in der elastische Elemente 6, 7, die eine Bremspedalcharakteristiksimulationseinrichtung bilden, eine Kopplung zwischen dem ersten (2) und dem dritten Kolben 5 bewirken.

Weiterhin ist ein zweiter Kolben 4 vorgesehen, der einem Hauptzylinder 1 zugeordnet ist und darin einen Druckaufbau ermöglicht. Der Hauptzylinder 1 ist über eine lediglich schematisch angedeutete elektrohydraulische Regel- bzw. Steuereinheit 28 eines Blockierschutzsystems (ABS) an nicht gezeigte Radbremsen des Fahrzeuges angeschlossen.

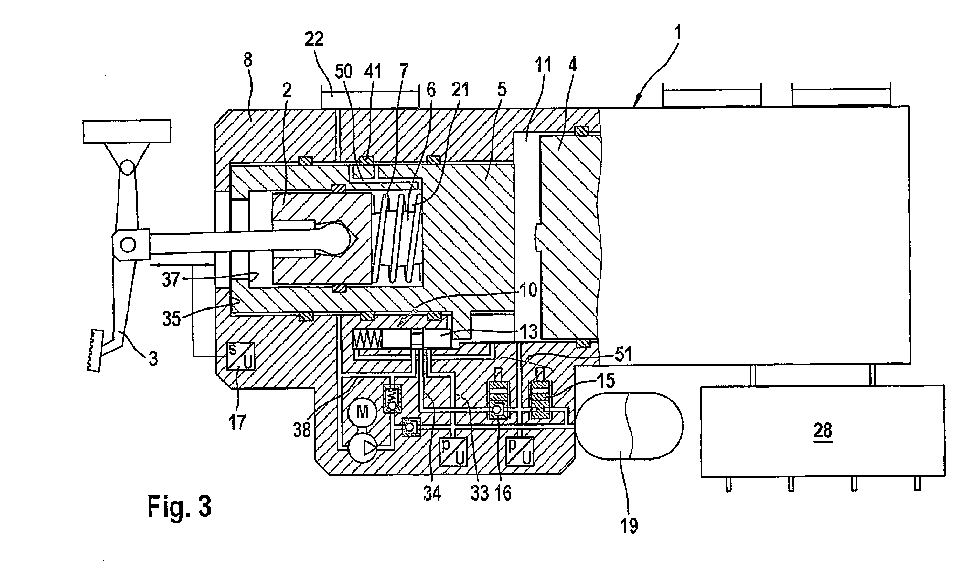

Der erste (2), der zweite (4) und der dritte Kolben 5 sind in einem Gehäuse 8 untergebracht. Zwischen dem dritten Kolben 5 und dem zweiten Kolben 4 befindet sich ein Zwischenraum 11, der mit Druckmittel befüllbar ist. Die Steuerung des Drucks in dem Zwischenraum 11 geschieht in einem bevorzugten "Brake-by-Wire"-Betriebsmodus (s. Fig. 3) auf folgende Weise: Der Fahrer bewegt bei Betätigung des Bremspedals 3 den ersten Kolben 2 entgegen der Federkraft der elastischen Elemente 6 und 7. Die elastischen Elemente 6 und 7 sind so ausgeführt, dass sie dem Fahrer das Bremsgefühl vermitteln, das einer gewöhnlichen Bremspedalcharakteristik entspricht. Dies bedeutet, dass bei geringem Bremspedalweg der Widerstand langsam ansteigt und bei größerem Bremspedalweg überproportional zunimmt. Durch Betätigen des Bremspedals 3 kann nun auch der dritte Kolben 5 in Richtung des zweiten Kolbens 4 bewegt werden, wodurch bereits nach einem sehr geringen verfahrweg eine erste Ventileinrichtung 10 betätigt wird. Die erste Ventileinrichtung 10 ist im dargestellten Beispiel als ein hydromechanisches Verstärkerventil ausgebildet, das einen Ventilkörper 13 aufweist, der mittels einer Feder 32 in Richtung auf den zweiten Kolben 4 zu vorgespannt wird und zwei Steuerkanten aufweist, deren Aufgabe im nachfolgenden Text erläutert wird. Eine hydraulische Verbindung 12, die entweder, wie dargestellt, im Gehäuse 8 ausgebildet oder alternativ durch eine nicht gezeigte axiale Durchgangsbohrung im Ventilkörper 3 gebildet wird, ermöglicht ein Beaufschlagen der dem Zwischenraum 11 abgewandten Stirnfläche des Ventilkörpers 13 mit dem im Zwischenraum 11 eingesteuerten Druck. Der Ventilkörper 13 wirkt dabei mit einem Betätigungselement zusammen, das in der dargestellten Ausführungsform als ein am dritten Kolben 5 angeformter radialer Vorsprung 14 ausgebildet ist. Bewegt sich der dritte Kolben 5 ein wenig in Richtung des zweiten Kolbens 4, so folgt der Ventilkörper 13 seiner Bewegung so lange, bis eine Verbindung zwischen dem Zwischenraum 11 und einer hydraulischen Druckquelle 9 hergestellt wird. Diese Verbindung wird dadurch hergestellt, dass die in der Zeichnung rechte Steuerkante des Ventilkörpers 13 den Strömungsweg zwischen einer von der Druckquelle 9 her führenden hydraulischen Druckleitung 23 bzw. einem von dieser abzweigenden Leitungsabschnitt 33 und einem im Zwischenraum 11 mündenden Druckmittelkanal 34 freigibt. Die hydraulische Druckquelle 9 wird vorzugsweise durch einen Hochdruckspeicher 19 gebildet, der durch ein Motor-Pumpen-Aggregat 20 aufgeladen wird. Das Motor-Pumpen-Aggregat 20 besteht aus einem Elektromotor 26 sowie einer hydraulischen Pumpe 27, deren Saugseite an einen drucklosen Druckmittelvorratsbehälter 22 angeschlossen ist, während ihre Druckseite über die vorhin genannte Leitung 23 mit dem Hochdruckspeicher 19 in Verbindung steht. In der Leitung 23 ist ein zum Hochdruckspeicher 19 hin öffnendes Rückschlagventil 24 eingefügt, wobei ein Drucksensor 39 die Überwachung des Ladezustands des Hochdruckspeichers 19 ermöglicht. Der Hochdruckspeicher 19 unterstützt die Pumpe 27 vor allem in den Fällen, in denen beispielsweise bei einer schnellen Vollbremsung in kurzer Zeit Druck aufgebaut werden muss, den die Pumpe 27 aufgrund ihrer Massenträgheit nicht sofort bereitstellen kann. Mittels der Verbindung zwischen dem Hochdruckspeicher 19 und dem Zwischenraum 11 wird dieser mit Druck beaufschlagt, wodurch der zweite Kolben 4 im Hauptzylinder 1 Druck aufbaut und der dritte Kolben 5 in Richtung eines Anschlags 35 im Gehäuse 8 gedrückt wird, an dem er vor dem Betätigen der Bremse anlag. Eine zweite Ventileinrichtung 51 besteht aus einem an den Hochdruckspeicher 19 angeschlossenen Ventil 15, einem Druckaufbauventil, das im unbestromten Zustand geschlossen ist, und einem in den Druckmittelkanal 34 eingefügten Ventil 16, in der dargestellten Ausführungsform einem Trennventil, das im unbestromten Zustand geöffnet ist, so dass die Pumpe 27 beziehungsweise der Hochdruckspeicher 19 den Zwischenraum 11 über die vorhin erläuterte Verbindung mit Druck beaufschlagen kann. Ein Drucksensor 18 kann den in dem Zwischenraum 11 eingesteuerten Druck erfassen. Durch Bestromen des Trennventils 16 kann ein Abfließen von Druckmittel aus dem Zwischenraum 11 über die Ventileinrichtung 10 unterbunden werden, während durch Bestromen des Druckaufbauventils 15 dem Zwischenraum 11 Druckmittel zugeführt werden kann.

Im unbetätigten Zustand des Bremspedals 3 (s. Fig. 1) wird der erste Kolben 2 über die elastischen Elemente 6 und 7 gegen einen Anschlag 37 angedrückt, der im dritten Kolben 5 ausgebildet ist.

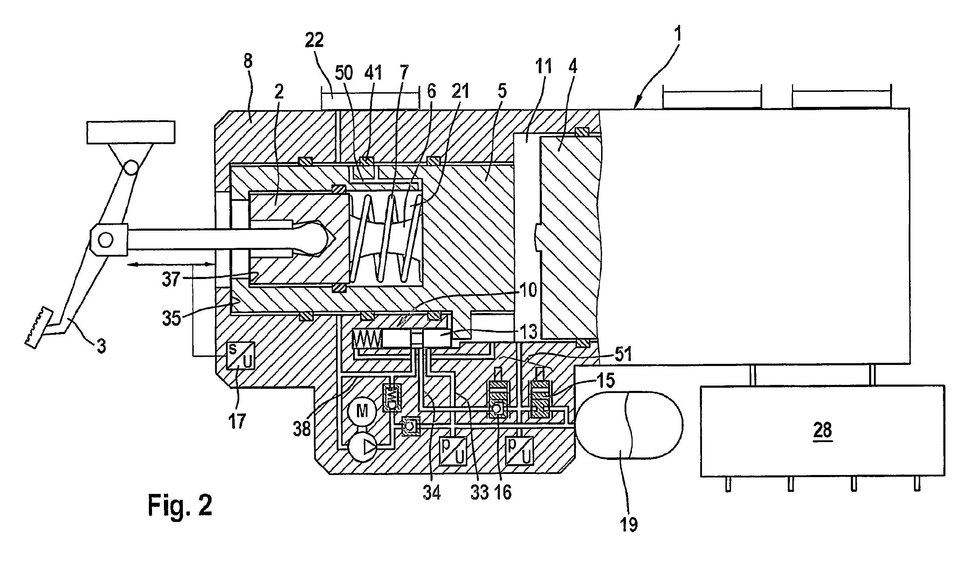

Im ersten Betriebsmodus, dessen Druckhaltephase in Fig. 2 dargestellt ist und der durch einen vom Fahrerwillen unabhängigen Bremsvorgang charakterisiert ist, wird durch Ansteuern der zweiten Ventileinrichtung 51 der Betätigungsdruck im Zwischenraum 11 einem fortlaufend neu berechneten Solldruckwert nachgeführt. Dazu kann durch Bestromen des Trennventils 16 der Volumenstrom zur Ventileinrichtung 10 unterbunden werden, die Möglichkeit des umgekehrten Volumenstroms von der ersten Ventileinrichtung 10 durch das Trennventil 16 zum Druckaufbau im Zwischenraum 11 bleibt erhalten. Über das Druckaufbauventil 15 kann elektronisch gesteuert ein höherer Betätigungsdruck eingestellt werden als der, den das hydromechanische Verstärkerventil, die Ventileinrichtung 10, vorgeben würde. Zum elektronisch gesteuerten Druckabbau wird die Bestromung des Trennventils 16 vorübergehend ausgesetzt, so dass Druckmittel zur ersten Ventileinrichtung 10 abfließen kann, die in diesem Betriebszustand eine Verbindung zum Druckmittelvorratsbehälter 22 herstellt. Diese Verbindung kommt dadurch zustande, dass die in der Zeichnung linke Steuerkante des Ventilkörpers 13 den Strömungsweg zwischen dem Druckmittelkanal 34 und einer von der ersten Ventileinrichtung 10 zum Druckmittelvorratsbehälter 22 führenden hydraulischen Verbindung 38 freigibt. Diese elektronische Bremsdruck-Regelung hat den Vorteil, dass ihr Übertragungsverhalten im Rahmen der durch die technischen Daten von Hochdruckspeicher, Druckaufbau- und Trennventil gegebenen Dynamik frei wählbar ist. Daher können eine sogenannte Springerfunktion, d.h. das Springen auf einen vorgegebenen Bremsdruckwert beim Antippen des Bremspedals 3, eine Bremsassistentenfunktion, eine Verzögerungsregelung und ein autonomes Bremsen, wie es beispielsweise für ASR (Antriebs-Schlupf-Regelung), ESP (Elektronisches Stabilitäts-Programm) und ACC (Adaptive Cruise Control) benötigt wird, durch Softwaremaßnahmen realisiert werden. Hierfür wird die Fahrervorgabe in Form einer Bremspedalbetätigung, die durch Weg-, Kraft- oder sonstige Sensoren erfasst wird, von einer nicht dargestellten Recheneinheit durch Anwendung geeigneter Algorithmen in Radbremsdrücke umgerechnet, die mit Hilfe der elektronisch schaltbaren Ventile im Fremdkraft-Bremsmodul und der nachgeschalteten ABS-Hydraulik realisiert werden.

In dem zweiten, dem "Brake-by-wire"-Betriebsmodus, dessen Druckhaltephase in Fig. 3 dargestellt ist und der durch einen vom Fahrerverzögerungswunsch eingeleiteten Fremdbremsvorgang charakterisiert ist, wird im Zwischenraum 11 durch eine entsprechende Ansteuerung der Ventile 15, 16 nach Maßgabe des Signals des den Fahrerwunsch erfassenden Wegsensors 17 ein hydraulischer Druck eingeregelt. In der in Fig. 3 dargestellten Druckhaltephase bleibt das Druckaufbauventil 15 unbestromt, während das Trennventil 16 bestromt und in seiner Sperrstellung gehalten wird. Ansonsten ist der "Brake-by-wire"-Betriebsmodus bei elektrohydraulischen Bremsanlagen bekannt und braucht deshalb nicht ausführlich erörtert zu werden.

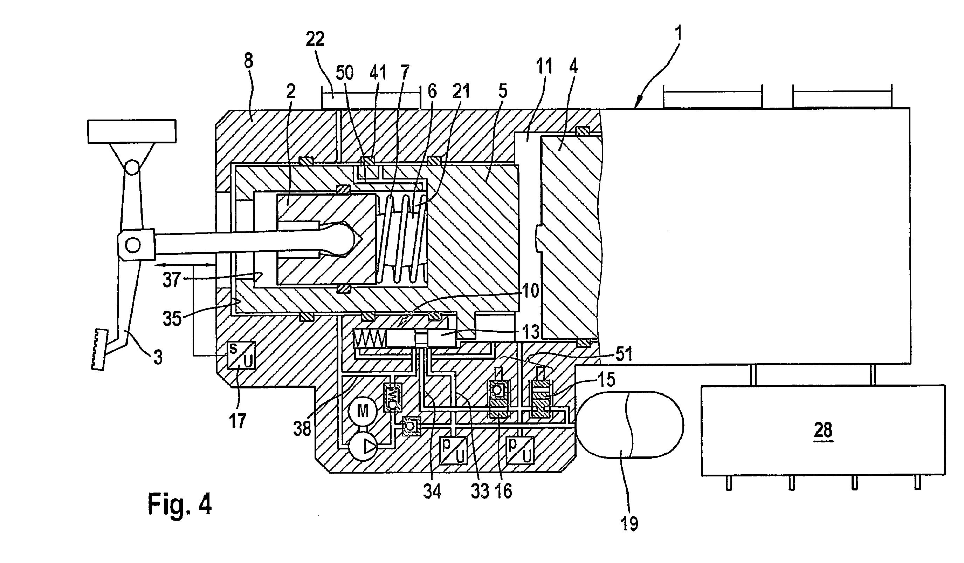

Im dritten Betriebsmodus (s. Fig. 4), der durch einen Ausfall der elektrischen Stromversorgung bzw. die sog. hydraulische Rückfallebene charakterisiert ist, bleiben die elektromagnetischen Ventile 15 und 16 unbestromt. Dadurch kann die Ventileinrichtung 10, das hydromechanische Verstärkerventil, den Betätigungsdruck im Zwischenraum 11 regeln und so eine Bremskraftverstärkung bewirken. Dabei wird der Druckaufbau durch das Zusammenwirken der in der Zeichnung rechten Steuerkante des Ventilkörpers 13 mit dem Leitungsabschnitt 33 geregelt, während der Druckabbau durch das Zusammenwirken der in der Zeichnung linken Steuerkante mit der hydraulischen Leitung 38 geregelt wird. Die hydraulische Verstärkung funktioniert ohne Elektrizität, solange der Hochdruckspeicher 19 unter Druck stehendes Druckmittel abgeben kann. Es liegt eine lineare Kraftverstärkung vor, deren Verstärkungsfaktor durch das Verhältnis der Querschnittsflächen von zweitem Kolben 4 zu drittem Kolben 5 fest vorgegeben ist.

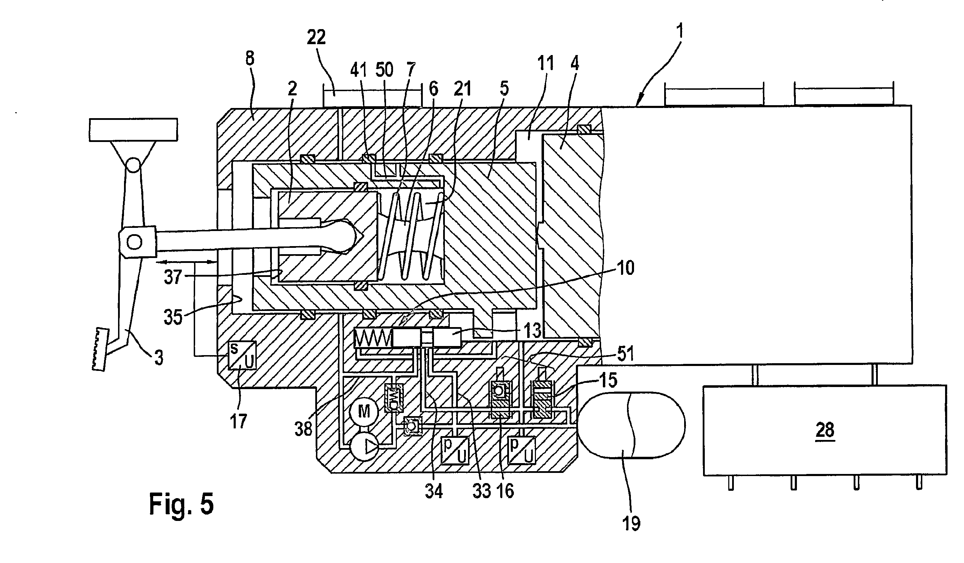

Im vierten Betriebsmodus, der durch das Fehlen eines hydraulischen Drucks im Druckspeicher 19 bzw. die sog. mechanische Rückfallebene (s. Fig. 5) charakterisiert ist, kann die Bremsanlage rein mechanisch betätigt werden, der dritte Kolben 5 bewegt sich unter der Wirkung einer am Bremspedal 3 eingeleiteten Betätigungskraft von seinem Anschlag 35 weg und verschiebt den zweiten Kolben 4 durch eine mechanische Kraftübertragung, so dass die Betätigung des Hauptzylinders 1 ausschließlich mit Muskelkraft erfolgt. Durch die stattfindende Relativbewegung des dritten Kolbens 5 gegenüber dem Gehäuse 8 erfolgt eine Absperrung der oben erwähnten hydraulischen Kammer 21, indem die Mündung einer an die hydraulische Kammer 21 angeschlossenen Leitung 50 eine im Gehäuse 8 angeordnete, feststehende Dichtung 41 überfährt. Durch die Absperrung wird die Funktion der Bremspedalcharakteristiksimulations-einrichtung 6,7 abgeschaltet, so dass eine direkte Kraftübertragung vom ersten (2) auf den dritten Kolben 5 statt findet.

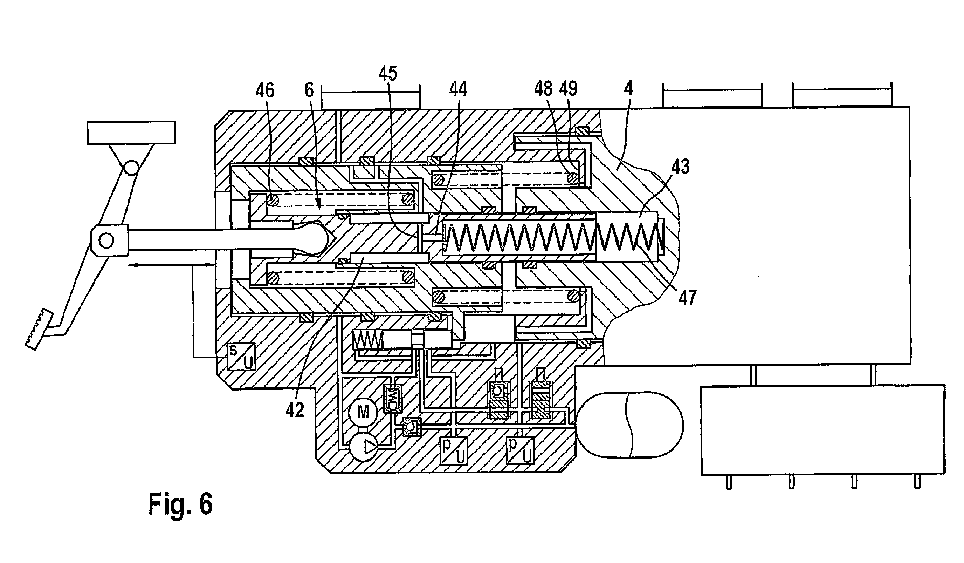

In Figur 6 ist eine zweite erfindungsgemäße Ausführungsform dargestellt, bei der die vorhin erwähnte hydraulische Kammer 21 vom ersten Kolben 2 teilweise im dritten Kolben 5 und teilweise im zweiten Kolben 4 begrenzt ist. Die hydraulische Verbindung zwischen dem im dritten Kolben 5 ausgebildeten Teil 42 der Kammer 21 mit ihrem im zweiten Kolben 4 ausgebildeten Teil 43 erfolgt über im ersten Kolben 2 senkrecht zueinander ausgebildeten Bohrungen 44, 45, wobei das vorhin erwähnte elastische Element 6 der Bremspedalcharakteristiksimulationseinrichtung bzw. eine Druckfeder 46 außerhalb der hydraulischen Kammer 21 (bzw. 42) angeordnet ist und somit trocken bleibt. Eine zweite, die Wirkung der Druckfeder 46 unterstützende Druckfeder 47 stützt sich einerseits am ersten Kolben 2 und andererseits am zweiten Kolben 4 ab. Eine dritte Druckfeder 48 spannt den dritten Kolben 5 entgegen der Betätigungsrichtung der Bremsanlage vor und stützt sich an einer im Gehäuse 8 ausgebildeten Anlagefläche 49 ab.

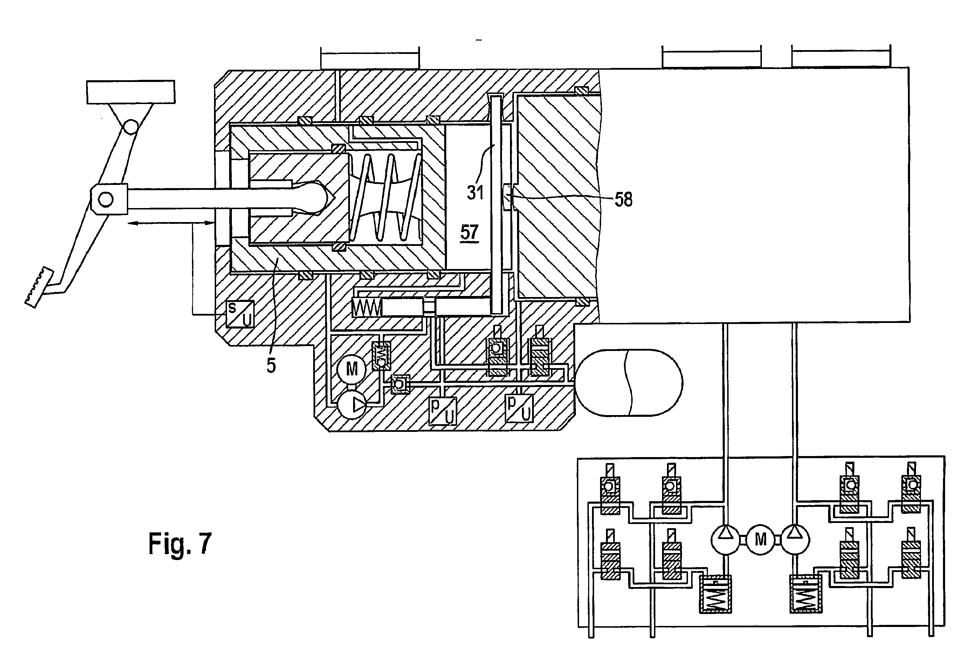

Bei einer in Fig. 7 dargestellten dritten Ausführung der erfindungsgemäßen Bremsanlage erfolgt die Betätigung der Ventileinrichtung 10 durch einen mit dem dritten Kolben (5) zusammenwirkenden Hebel bzw. Querstab 31. Der Querstab 31, der mit dem Ventilkörper 13 in kraftübertragender Verbindung steht, ist im Gehäuse 8 gelagert, erstreckt sich im Ruhezustand vorzugsweise senkrecht zur Längsachse des dritten Kolbens 5 durch eine im dritten Kolben 5 ausgebildete Ausnehmung 53 hindurch und stützt sich unter der Wirkung der vorhin erwähnten Feder 32 auf die Art eines zweiarmigen Hebels an einem am dritten Kolben 5 ausgebildeten Vorsprung 54 ab.

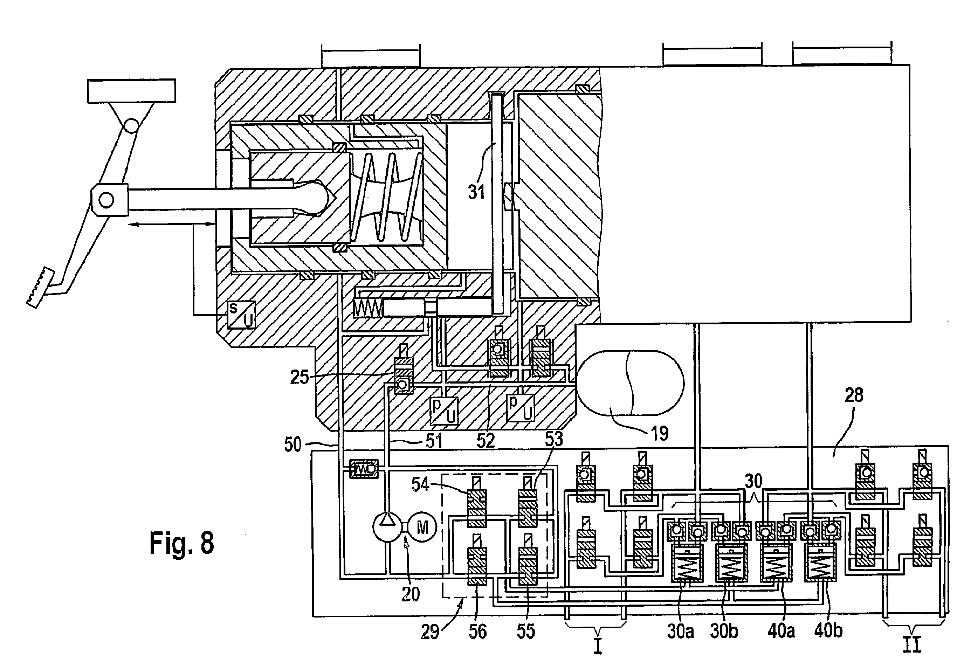

Bei einer in Fig. 8 dargestellten vierten Ausführung der erfindungsgemäßen Bremsanlage ist das Motor-Pumpen-Aggregat 20 in der vorhin erwähnten elektrohydraulischen Steuer- und Regeleinheit 28 integriert. Die Saugseite der Pumpe 27 wird über eine zwischen dem Gehäuse 8 und der Steuer- bzw. Regeleinheit 28 angeordnete, zum Druckmittelvorratsbehälter 22 hin führende erste hydraulische Verbindung 50 mit Druckmittel unter Atmosphärendruck versorgt. Das von der Pumpe 26 unter hohem Druck abgegebene Druckmittel wird über eine zweite, zwischen der Steuer- bzw. Regeleinheit 28 und dem Gehäuse 8 angeordnete, hydraulische Verbindung 51 sowie einen innerhalb des Gehäuses 8 verlaufenden, zum Hochdruckspeicher 19 führenden Verbindungsabschnitt 52 dem Hochdruckspeicher 19 zugeführt. Dabei ist im Verbindungsabschnitt 52 ein elektrisch schaltbares Ventil 25, vorzugsweise ein 2/2-Wegeventil eingefügt, das in einer ersten Schaltstellung die Funktion eines zum Hochdruckspeicher 19 hin öffnenden Rückschlagventils erfüllt und in einer zweiten Schaltstellung die hydraulische Verbindung 51 freigibt. Bei freigegebener Verbindung 51 kann die Steuer- bzw. Regeleinheit bei nicht oder noch nicht betriebsbereitem Motor-Pumpen-Aggregat 20 aus dem Hochdruckspeicher 19 mit hydraulischer Energie versorgt werden. Verzichtet man auf dieses Merkmal, dann kann das elektrisch schaltbare Ventil 25 durch ein Rückschlagventil ersetzt werden.

Außerdem beinhaltet die elektrohydraulische Steuer- und Regeleinheit 28 eine Einrichtung 30 zum Rückfördern von bei Blockierschutzregelvorgängen entstehendem, überschüssigem Druckmittelvolumen in den Hauptbremszylinder 1. Die Rückfördereinrichtung 30, die durch den von dem Motor-Pumpen-Aggregat 20 aufgebrachten Druck sowie durch den im Hochdruckspeicher 19 vorliegenden Druck antreibbar ist, wird durch mindestens zwei Niederdruckspeicher 30a, 30b, 40a, 40b gebildet, die abwechselnd ein anfallendes Druckmittelvolumen aufnehmen bzw. das angefallene Druckmittelvolumen durch die Wirkung des antreibenden Druckes im Sinne einer Rückförderung in den Hauptbremszylinder 1 verdrängen. Bei der gezeigten Ausführung sind zwei Gruppen von Niederdruckspeichern 30a, 30b und 40a, 40b vorgesehen, wobei jedem Bremskreis I, II jeweils ein Paar Niederdruckspeicher 30a, 30b; 40a, 40b derart zugeordnet ist, dass in jedem der Bremskreise I und II ein der Gruppe a, sowie ein der Gruppe b zugehöriger Niederdruckspeicher vertreten ist. Die Niederdruckspeicher 30a, 30b, 40a, 40b können auf ihrer den Niederdruck-Anschlüssen abgewandten Seite mit dem von dem vorhin erwähnten Motor-Pumpen-Aggregat 20 aufgebrachten hohen Druck beaufschlagt werden, so dass das darin enthaltene bremskreisseitige Druckmittelvolumen in den Hauptbremszylinder 1 zurückgefördert werden kann. Dabei arbeiten die beiden Gruppen 30a, 40a, bzw. 30b, 40b zyklisch nach dem Schema:
- Rückfördern der ersten Gruppe 30a, 40a,
- kein Rückfördern,
- Rückfördern der zweiten Gruppe 30b, 40b,
- kein Rückfördern.

Die Druckbeaufschlagung wird mittels einer dem Motor-Pumpen-Aggregat 20 zugeordneten Ventilanordnung 29 derart gesteuert, dass zu jedem Zeitpunkt mindestens ein Niederdruckspeicher pro Bremskreis in der Lage ist, das von den in der elektrohydraulischen Steuer- und Regeleinheit 28 enthaltenen, nicht näher bezeichneten Druckregelventilen abgelassene Druckmittel aufzunehmen. Die Ventilanordnung 29 besteht dabei vorzugsweise aus vier Ventilen 53, 54, 55, 56, die in Form einer H-Brückenschaltung derart geschaltet sind, dass das Ventilpaar 53, 54 der ersten Niederdruckspeicher-Gruppe 30a, 40a und das Ventilpaar 55, 56 der zweiten Niederdruckspeicher-Gruppe 30b, 40b zugeordnet sind. Durch Umschalten der Ventile 53, 55 werden die Niederdruckspeicher-Gruppen mit dem Fremddruck beaufschlagt, während durch Umschalten der Ventile 54, 56 die Niederdruckspeicher-Gruppen mittels der vorhin erwähnten hydraulischen Verbindung 50 mit dem Druckmittelvorratsbehälter 22, d.h. mit dem Atmosphärendruck, verbunden werden.

Der Ansteuerung sämtlicher vorhin erwähnten Ventile sowie des Elektromotors 26 dient eine vorzugsweise mit der Steuer- bzw. Regeleinheit, 28 eine Baueinheit bildende, nicht dargestellte elektronische Steuereinheit, der als Eingangsinformationen die Ausgangssignale der Sensoren 17, 18 und 39 zugeführt werden.

## Patentansprüche

1. Elektrohydraulische Bremsanlage für Kraftfahrzeuge, die in einer Betriebsart "Brake-by-Wire" betrieben werden kann, mit
- einem Hauptzylinder (1), an den Radbremszylinder anschließbar sind,
- einem ersten Kolben (2), der mit einem Bremspedal (3) gekoppelt ist,
- einem zweiten Kolben (4), der den Hauptzylinder (1) betätigt,
- einem dritten Kolben (5), der vom ersten Kolben (2) betätigbar ist,
wobei zwischen dem ersten (2) und dem dritten Kolben (5) mindestens eine eine Simulatorkraft ausübende Bremspedalcharakteristiksimulationseinrichtung (6, 7) vorgesehen ist, die in der by-Wire-Betriebsart dem Fahrzeugführer ein komfortables Pedalgefühl vermittelt, und alle drei Kolben (2, 4, 5), sowie die Wegsimulatoreinrichtung in einem Gehäuse (8) angeordnet sind,
- einer hydraulischen Druckquelle (9), sowie
- einer durch den dritten Kolben (5) betätigbaren Ventileinrichtung (10) zum Reduzieren des Drucks der Druckquelle (9) auf einen Wert, mit dem der zweite Kolben (4) beaufschlagbar ist,
wobei der zweite (4) und der dritte Kolben (5) durch einen Zwischenraum (11) derart voneinander getrennt sind, dass der dritte Kolben (5) durch den den zweiten Kolben (4) beaufschlagenden Druck in der der Beaufschlagungsrichtung des zweiten Kolbens (4) entgegengesetzten Richtung beaufschlagt wird, **dadurch gekennzeichnet, dass** beide Stirnflächen eines Ventilkörpers (13) der Ventileinrichtung (10) der Wirkung des im Zwischenraum (11) herrschenden Druckes ausgesetzt sind.

2. Bremsanlage nach Anspruch 1, **dadurch gekennzeichnet, dass** eine Stirnfläche des Ventilkörpers (13) über eine im Gehäuse (8) vorgesehene hydraulische Verbindung (12) der Wirkung des im Zwischenraum (11) herrschenden Druckes ausgesetzt ist.

3. Bremsanlage nach Anspruch 1, **dadurch gekennzeichnet, dass** die beiden Stirnflächen des Ventilkörpers (13) über eine Längsbohrung im Ventilkörper (13) miteinander kommunizieren.

4. Bremsanlage nach einem der Ansprüche 1 bis 3, **dadurch gekennzeichnet, dass** die Bewegungsrichtungen des Ventilkörpers (13) und des dritten Kolbens (5) bei einer Betätigung der Ventileinrichtung (10) durch den dritten Kolben (5) identisch sind.

5. Bremsanlage nach einem der Ansprüche 1 bis 4, **dadurch gekennzeichnet, dass** der Ventilkörper (13) durch den dritten Kolben (5) direkt betätigbar ist.

6. Bremsanlage nach Anspruch 5, **dadurch gekennzeichnet, dass** der dritte Kolben (5) mit einem radialen Vorsprung (14) versehen ist, der mit der dem Zwischenraum (11) zugewandten Stirnfläche des Ventilkörpers (13) kraftübertragend zusammenwirkt.

7. Bremsanlage nach einem der Ansprüche 1 bis 4, **dadurch gekennzeichnet, dass** der Ventilkörper (13) durch einen mit dem dritten Kolben (5) zusammenwirkenden, im Gehäuse (8) gelagerten, vorzugsweise senkrecht zur Längsachse des dritten Kolbens (5) angeordneten Hebel bzw. Querstab (31) betätigbar ist.

8. Bremsanlage nach einem der Ansprüche 1 bis 7, **dadurch gekennzeichnet, dass** die hydraulische Druckquelle (9) durch einen Hochdruckspeicher (19) gebildet ist, der durch ein Motor-Pumpen-Aggregat (20) aufladbar ist.

9. Bremsanlage nach einem der Ansprüche 1 bis 8, **dadurch gekennzeichnet, dass** eine mittels einer elektronischen Steuereinheit elektrisch betätigbare zweite Ventileinrichtung (15, 16) vorgesehen ist, mit der der in den Zwischenraum (11) einzuspeisende Druck beeinflussbar ist und die im Gehäuse (8) integriert ist.

10. Bremsanlage nach einem der Ansprüche 1 bis 9, **dadurch gekennzeichnet, dass** ein Drucksensor (39) zum Überwachen des Ladezustands des Hochdruckspeichers (19) vorgesehen ist, dessen Ausgangssignal der elektronischen Steuereinheit zugeführt wird und der im Gehäuse (8) integriert oder formschlüssig mit diesem verbunden ist.

11. Bremsanlage nach einem der Ansprüche 1 bis 10, **dadurch gekennzeichnet, dass** ein Drucksensor (18) zum Erfassen des im Zwischenraum (11) herrschenden Druckes vorgesehen ist, dessen Ausgangssignal der elektronischen Steuereinheit zugeführt wird und der im Gehäuse (8) integriert oder formschlüssig mit diesem verbunden ist.

12. Bremsanlage nach wenigstens Anspruch 8, **dadurch gekennzeichnet, dass** der Hochdruckspeicher (19) direkt am Gehäuse (8) angeordnet ist, wobei eine hydraulische Verbindung (23) zwischen der Druckseite einer Pumpe (27) des Motor-Pumpen-Aggregats (20) und dem Hochdruckspeicher (19) durch wenigstens eine im Gehäuse (8) vorgesehene Bohrung gebildet ist.

13. Bremsanlage nach Anspruch 12, **dadurch gekennzeichnet, dass** in der hydraulischen Verbindung (23) ein zum Hochdruckspeicher (19) hin öffnendes Rückschlagventil (24) eingefügt ist.

14. Bremsanlage nach einem der vorhergehenden Ansprüche, **dadurch gekennzeichnet, dass** an den Hauptbremszylinder (1) eine elektrohydraulische Steuer- bzw. Regeleinheit (28) eines Blockierschutzregelsystems (ABS) angeschlossen ist.

15. Bremsanlage nach Anspruch 14, **dadurch gekennzeichnet, dass** die elektrohydraulische Steuer- bzw. Regeleinheit (28) nach dem Rückförderprinzip arbeitet und eine Einrichtung (30) zum Rückfördern von überschüssigem Druckmittelvolumen in den Hauptbremszylinder (1) aufweist.

16. Bremsanlage nach wenigstens Anspruch 8 und 14, **dadurch gekennzeichnet, dass** das Motor-Pumpen-Aggregat (20) in der elektrohydraulischen Steuer- bzw. Regeleinheit (28) integriert ist.

17. Bremsanlage nach Anspruch 16, **dadurch gekennzeichnet, dass** die Pumpe (27) über eine zwischen dem Gehäuse (8) und der Steuer- bzw. Regeleinheit (28) angeordnete erste hydraulische Verbindung (50) mit Druckmittel unter Atmosphärendruck versorgt wird und das von der Pumpe (27) unter hohem Druck abgegebene Druckmittel über eine zweite, zwischen der Steuer- bzw. Regeleinheit (28) und dem Gehäuse (8) angeordnete, hydraulische Verbindung (51) zu einem innerhalb des Gehäuses (8) verlaufenden, zum Hochdruckspeicher (19) führenden Abschnitt (52) der hydraulischen Verbindung (23) geleitet wird.

18. Bremsanlage nach Anspruch 17, **dadurch gekennzeichnet, dass** innerhalb des Abschnitts (52) ein zum Hochdruckspeicher (19) hin öffnendes Rückschlagventil eingefügt ist.

19. Bremsanlage nach Anspruch 17, **dadurch gekennzeichnet, dass** innerhalb des Abschnitts (52) ein elektrisch schaltbares Ventil (25), vorzugsweise ein 2/2-Wegeventil eingefügt ist, das in einer ersten Schaltstellung die Funktion eines zum Hochdruckspeicher (19) hin öffnenden Rückschlagventils erfüllt und in einer zweiten Schaltstellung die hydraulische Verbindung (51) freigibt.

20. Bremsanlage nach Anspruch 15, **dadurch gekennzeichnet, dass** die Einrichtung (30) zum Rückfördern von überschüssigem Druckmittelvolumen durch den von dem Motor-Pumpen-Aggregat (9) aufgebrachten Druck antreibbar ist.

21. Bremsanlage nach Anspruch 15, **dadurch gekennzeichnet, dass** die Einrichtung (30) zum Rückfördern von überschüssigem Druckmittelvolumen sowohl durch den von dem Motor-Pumpen-Aggregat (20) aufgebrachten Druck als auch durch den im Hochdruckspeicher (19) vorliegenden Druck antreibbar ist.

22. Bremsanlage nach Anspruch 20 oder 21, **dadurch gekennzeichnet, dass** die Einrichtung (30) durch mindestens zwei Niederdruckspeicher (30a,b;40a,b) gebildet ist, die abwechselnd ein anfallendes Druckmittelvolumen aufnehmen bzw. das angefallene Druckmittelvolumen durch die Wirkung des antreibenden Druckes im Sinne einer Rückförderung verdrängen.

23. Bremsanlage nach Anspruch 8 und einem der vorhergehenden Ansprüche 20 bis 22, **dadurch gekennzeichnet, dass** das Motor.-Pumpen-Aggregat (20) oder der Hochdruckspeicher (19) in Verbindung mit dem elektrisch schaltbaren Ventil (25) mit einer Ventilanordnung (29) zusammenwirkt, die abwechselnd den antreibenden Druck bzw. den Atmosphärendruck für die Niederdruckspeicher (30a,b;40a,b) bereitstellt.

24. Bremsanlage nach Anspruch 23, **dadurch gekennzeichnet, dass** die Ventilanordnung (29) in der elektrohydraulischen Steuer- bzw. Regeleinheit (28) integriert ist.

25. Bremsanlage nach einem der vorhergehenden Ansprüche, **dadurch gekennzeichnet, dass** die Bremspedalcharakteristiksimulationseinrichtung wenigstens ein elastisches Element (6,7) enthält, das einen vom Re-Jativweg zwischen erstem (2) und drittem Kolben (5) abhängigen "Federkraft"-Anteil der Simulatorkraft ausübt.

26. Bremsanlage nach Anspruch 25 **dadurch gekennzeichnet, dass** die Bremspedalcharakteristiksimulationseinrichtung wenigstens eine Dämpfungseinrichtung enthält, die eine von der Relativgeschwindigkeit zwischen erstem (2) und drittem Kolben (5) abhängigen "Dämpfungskraft"-Anteil der Simulatorkraft ausübt.

27. Bremsanlage nach Anspruch 25 oder 26 **dadurch gekennzeichnet, dass** die Bremspedalcharakteristiksimulationseinrichtung (6,7) wenigstens eine der Simulatorkraft ausübenden Komponenten «Stahlfeder, Elastomerkörper, und Reibverbindung» enthält.

28. Bremsanlage nach einem der Ansprüche 25 bis 27 **dadurch gekennzeichnet, dass** die Bremspedalcharakteristiksimulationseinrichtung (6,7) derart sperrbar ist, dass sie in gesperrtem Zustand eine über die bestehenden Kolbenpositionen hinausgehende Bewegung des ersten Kolbens (2) relativ zum dritten Kolben (5) in Betätigungsrichtung verhindert.

29. Bremsanlage nach Anspruch 28 **dadurch gekennzeichnet, dass** die Sperrung der Bremspedalcharakteristiksimulationseinrichtung (6,7) in Abhängigkeit vom Relativweg des dritten Kolbens (5) gegenüber dem Gehäuse (8) erfolgt.

30. Bremsanlage nach Anspruch 29 **dadurch gekennzeichnet, dass** die Bremspedalcharakteristiksimulationseinrichtung mit einer von dem ersten Kolben (2) im dritten Kolben (5) begrenzten hydraulischen Kammer (21) zusammenwirkt, die über eine weitere hydraulische Verbindung (50) mit einem drucklosen Druckmittelvorratsbehälter (22) in Verbindung steht und die durch eine Relativbewegung des dritten Kolbens (5) gegenüber dem Gehäuse (8) absperrbar ist.

31. Bremsanlage nach einem der Ansprüche 25 bis 27 **dadurch gekennzeichnet, dass** die Bremspedalcharakteristiksimulationseinrichtung (6,7) derart sperrbar ist, dass sie in gesperrtem Zustand eine über die bestehenden Kolbenpositionen hinausgehende Bewegung des ersten Kolbens (2) relativ zum zweiten Kolben (4) in Betätigungsrichtung verhindert.

32. Bremsanlage nach Anspruch 29 **dadurch gekennzeichnet, dass** die Bremspedalcharakteristiksimulationseinrichtung mit einer von dem ersten Kolben (2) im dritten Kolben (5) sowie im zweiten Kolben (4) begrenzten hydraulischen Kammer (42,43,44,45) zusammenwirkt, die mit dem drucklosen Druckmittelvorratsbehälter (22) in Verbindung steht und die durch eine Relativbewegung des dritten Kolbens (5) gegenüber dem Gehäuse (8) absperrbar ist.

33. Bremsanlage nach einem der Ansprüche 30 bis 32 **dadurch gekennzeichnet, dass** eine Dämpfung oder zumindest ein Anteil der Dämpfung der Bremspedalcharakteristiksimulationseinrichtung (6,7) durch eine entsprechende Dimensionierung einer hydraulischen Verbindung (50) zwischen der hydraulischen Kammer (42,43,44,45) und dem drucklosen Druckmittelvorratsbehälter (22) erzielt wird.

34. Bremsanlage nach Anspruch 33 **dadurch gekennzeichnet, dass** die Dämpfung der Bremspedalcharakteristiksimulationseinrichtung (6,7) durch eine in die hydraulische Verbindung (50) eingefügte hydraulische Dämpfungseinrichtung erzielt wird.

35. Bremsanlage nach Anspruch 34 **dadurch gekennzeichnet, dass** die Dämpfungseinrichtung hydraulische Blenden enthält und eine von der Durchströmungsrichtung abhängige Dämpfungscharakteristik aufweist.

36. Bremsanlage nach einem der Ansprüche 27 bis 35 **dadurch gekennzeichnet, dass** die die Simulatorkraft ausübenden Komponenten jeweils entweder außerhalb oder innerhalb der hydraulischen Kammer (21) angeordnet sind.

## Claims

1. Electrohydraulic brake system for motor vehicles, which can be operated in a 'brake-by-wire' mode of operation, comprising:
- a master cylinder (1) to which wheel brake cylinders can be connected,
- a first piston (2) which is coupled to a brake pedal (3),
- a second piston (4) which actuates the master cylinder (1),
- a third piston (5) which can be operated by the first piston (2),
with at least one brake pedal characteristics simulation device (6, 7) exerting a simulator force being provided between the first piston (2) and the third piston (5) and imparting a comfortable pedal feel to the operator in a by-wire mode of operation, and all three pistons (2, 4, 5) and the travel simulator device are arranged in a housing (8),
- a hydraulic pressure source (9) and
- a valve device (10) operable by the third piston (5) for reducing the pressure of the pressure source (9) to a value used for application of the second piston (4),
and the second piston (4) and the third piston (5) are isolated from each other by a space (11) in such a fashion that the third piston (5) is acted upon by the pressure that acts on the second piston (4) in the direction opposite to the direction of application of the second piston (4),
**characterized in that** both end surfaces of a valve member (13) of the valve device (10) are exposed to the effect of the pressure that prevails in the space (11).

2. Brake system as claimed in claim 1,
**characterized in that** an end surface of the valve member (13) is exposed to the effect of the pressure prevailing in the space (11) by way of a hydraulic connection (12) provided in the housing (8).

3. Brake system as claimed in claim 1,
**characterized in that** the two end surfaces of the valve member (13) communicate with each other through a longitudinal bore in the valve member (13).

4. Brake system as claimed in any one of claims 1 to 3,
**characterized in that** the moving directions of the valve member (13) and the third piston (5) upon actuation of the valve device (10) by the third piston (5) are identical.

5. Brake system as claimed in any one of claims 1 to 4,
**characterized in that** that valve member (13) can be actuated directly by the third piston (5).

6. Brake system as claimed in claim 5,
**characterized in that** the third piston (5) includes a radial projection (14) which cooperates in a force-transmitting fashion with the end surface of the valve member (13) facing the space (11).

7. Brake system as claimed in any one of claims 1 to 4,
**characterized in that** the valve member (13) is operable by a lever or cross bar (31) which cooperates with the third piston (5), is mounted in the housing (8) and arranged preferably vertically to the longitudinal axis of the third piston (5).

8. Brake system as claimed in any one of claims 1 to 7,
**characterized in that** the hydraulic pressure source (9) is formed of a high-pressure accumulator (19), which can be charged by a motor-and-pump assembly (20).

9. Brake system as claimed in any one of claims 1 to 8,
**characterized in that** a second valve device (15, 16) that is electrically operable by means of an electronic control unit is used to influence the pressure that is to be introduced into the space (11) and is integrated in the housing (8).

10. Brake system as claimed in any one of claims 1 to 9,
**characterized in that** a pressure sensor (39) is provided to monitor the charging condition of the high-pressure accumulator (19), whose output signal is sent to the electronic control unit and which is integrated in the housing (8) or form-lockingly connected to it.

11. Brake system as claimed in any one of claims 1 to 10,
**characterized in that** a pressure sensor (18) is provided to sense the pressure that prevails in the space (11), whose output signal is sent to the electronic control unit and which is integrated in the housing (8) or form-lockingly connected to it.

12. Brake system as claimed in at least claim 8,
**characterized in that** the high-pressure accumulator (19) is arranged directly at the housing (8), and a hydraulic connection (23) between the pressure side of a pump (27) of the motor-and-pump assembly (20) and the high-pressure accumulator (19) is formed by at least one bore provided in the housing (8).

13. Brake system as claimed in claim 12,
**characterized in that** a non-return valve (24) opening towards the high-pressure accumulator (19) is inserted into the hydraulic connection (23).

14. Brake system as claimed in any one of the preceding claims,
**characterized in that** an electronic control or regulation unit (28) of an anti-lock system (ABS) is connected to the master brake cylinder (1).

15. Brake system as claimed in claim 14,
**characterized in that** the electrohydraulic control or regulation unit (28) operates according to the return delivery principle and includes a device (30) for the return delivery of excessive pressure fluid volume into the master brake cylinder (1).

16. Brake system as claimed in at least claims 8 and 14,
**characterized in that** the motor-and-pump assembly (20) is integrated into the electrohydraulic control or regulation unit (28).

17. Brake system as claimed in claim 16,
**characterized in that** pressure fluid under atmospheric pressure is supplied to the pump (27) through a first hydraulic connection (50) arranged between the housing (8) and the control or regulation unit (28), and the pressure fluid discharged under high pressure from the pump (27) is conducted through a second hydraulic connection (51) being arranged between the control or regulation unit (28) and the housing (8) to a portion (52) of the hydraulic connection (23) that extends within the housing (8) and leads to the high-pressure accumulator (19).

18. Brake system as claimed in claim 17,
**characterized in that** a non-return valve opening to the high-pressure accumulator (19) is inserted within the portion (52).

19. Brake system as claimed in claim 17,
**characterized in that** inserted within the portion (52) is an electrically controllable valve (25), preferably a two-way/two-position directional control valve, which fulfils the function of a non-return valve opening towards the high-pressure accumulator (19) in a first switch position and opens the hydraulic connection (51) in a second switch position.

20. Brake system as claimed in claim 15,
**characterized in that** the device (30) for the return delivery of excess pressure fluid volume can be driven by the pressure generated by the motor-and-pump assembly (9).

21. Brake system as claimed in claim 15,
**characterized in that** the device (30) for the return delivery of excess pressure fluid volume can be driven both by the pressure generated by the motor-and-pump assembly (20) and by the pressure prevailing in the high-pressure accumulator (19).

22. Brake system as claimed in claim 20 or 21,
**characterized in that** the device (30) is provided by at least two low-pressure accumulators (30a,b; 40a,b) which alternately take up prevailing pressure fluid volume or displace the prevailing pressure fluid volume under the effect of the driving pressure in the sense of a return delivery.

23. Brake system as claimed in claim 8 and any one of the preceding claims 20 to 22,
**characterized in that** the motor-and-pump assembly (20) or the high-pressure accumulator (19) in conjunction with the electrically controllable valve (25) cooperates with a valve device (29) which alternately provides the driving pressure or the atmospheric pressure for the low-pressure accumulators (30a,b; 40a,b).

24. Brake system as claimed in claim 23,
**characterized in that** the valve device (29) is integrated into the electrohydraulic control or regulation unit (28).

25. Brake system as claimed in any one of the preceding claims,
**characterized in that** the brake pedal characteristics simulation device comprises at least one elastic element (6, 7), which exerts a `spring force' component of the simulator force that depends on the relative travel between the first (2) and the third piston (5).

26. Brake system as claimed in claim 25,
**characterized in that** the brake pedal characteristics simulation device comprises at least one damping device, which exerts a 'damping force' component of the simulator force that depends on the relative speed between the first piston (2) and the third piston (5).

27. Brake system as claimed in claim 25 or 26,
**characterized in that** the brake pedal characteristics simulation device (6, 7) comprises at least one of the components 'steel spring, elastomeric body, and frictional connection' exerting the simulator force.

28. Brake system as claimed in any one of claims 25 to 27,
**characterized in that** the brake pedal characteristics simulation device (6, 7) can be blocked in such a manner that it prevents in the blocked condition a movement of the first piston (2) relative to the third piston (5) in the actuating direction, which exceeds the existing piston positions.

29. Brake system as claimed in claim 28,
**characterized in that** the brake pedal characteristics simulation device (6, 7) is blocked in dependence on the relative travel of the third piston (5) with respect to the housing (8).

30. Brake system as claimed in claim 29,
**characterized in that** the brake pedal characteristics simulation device cooperates with a hydraulic chamber (21), which is limited by the first piston (2) in the third piston (5) and is in connection to an unpressurized pressure fluid supply reservoir (22) through another hydraulic connection (50) and which can be closed by a relative movement of the third piston (5) relative to the housing (8).

31. Brake system as claimed in any one of claims 25 to 27,
**characterized in that** the brake pedal characteristics simulation device (6, 7) can be blocked in such a manner that it prevents in the blocked condition a movement of the first piston (2) relative to the second piston (4) in the actuating direction, which exceeds the existing piston positions.

32. Brake system as claimed in claim 29,
**characterized in that** the brake pedal characteristics simulation device cooperates with a hydraulic chamber (42, 43, 44, 45), which is limited by the first piston (2) in the third piston (5) and in the second piston (4) and is in connection to the unpressurized pressure fluid supply reservoir (22) and which can be closed by a relative movement of the third piston (5) relative to the housing (8).

33. Brake system as claimed in any one of claims 30 to 32,
**characterized in that** damping or at least part of the damping of the brake pedal characteristics simulation device (6, 7) is achieved by a corresponding dimensioning of a hydraulic connection (50) between the hydraulic chamber (42, 43, 44, 45) and the unpressurized pressure fluid supply reservoir (22).

34. Brake system as claimed in claim 33,
**characterized in that** damping of the brake pedal characteristics simulation device (6, 7) is achieved by a hydraulic damping device inserted into the hydraulic connection (50).

35. Brake system as claimed in claim 34,
**characterized in that** the damping device comprises hydraulic orifices and includes a damping characteristics which depends on the direction of flow.

36. Brake system as claimed in any one of claims 27 to 35,
**characterized in that** the components exerting the simulator force are arranged in each case either outside or inside the hydraulic chamber (21).

## Revendications

1. Système de freinage électrohydraulique pour véhicule automobile, qui peut fonctionner en un mode "brake-by-wire", comportant
- un cylindre principal (1) auquel peuvent être raccordés des cylindres de frein de roue,
- un premier piston (2) qui est couplé à une pédale de frein (3),
- un deuxième piston (4) qui actionne le cylindre principal (1),
- un troisième piston (5) qui peut être actionné par le premier piston (2),
entre le premier piston (2) et le troisième piston (5) étant prévu au moins un dispositif de simulation de caractéristique de pédale de frein (6, 7) exerçant une force de simulateur, qui, en mode brake-by-wire, communique, au conducteur du véhicule, une sensation confortable de pédale, et les trois pistons (2, 4, 5) ainsi que le dispositif de simulation de course étant disposés dans un boîtier (8),
- une source de pression hydraulique (9), ainsi que
- un dispositif à soupape (10) pouvant être actionné par le troisième piston (5), pour réduire la pression de la source de pression (9) à une valeur à laquelle le deuxième piston (4) peut être sollicité,
le deuxième piston (4) et le troisième piston (5) étant séparés l'un de l'autre par un interstice (11) de manière que le troisième piston (5) soit sollicité par la pression agissant sur le deuxième piston (4) dans le sens opposé au sens d'action sur le deuxième piston (4), **caractérisé en ce que** les deux surfaces frontales d'un corps de soupape (13) du dispositif à soupape (10) sont soumises à l'action de la pression régnant dans l'interstice (11).

2. Système de freinage selon la revendication 1, **caractérisé en ce qu'**une surface frontale du corps de soupape (13) est soumise à l'action de la pression régnant dans l'interstice (11), par l'intermédiaire d'une liaison hydraulique prévue dans le boîtier (8).

3. Système de freinage selon la revendication 1, **caractérisé en ce que** les deux surfaces frontales du corps de soupape (13) communiquent l'une avec l'autre par un trou longitudinal du corps de soupape (13).

4. Système de freinage selon l'une des revendications 1 à 3, **caractérisé en ce que** les sens de déplacement du corps de soupape (13) et du troisième piston (5) sont identiques dans le cas d'un actionnement du dispositif à soupape (10) par le troisième piston (5).

5. Système de freinage selon l'une des revendications 1 à 4, **caractérisé en ce que** le corps de soupape (13) peut être directement actionné par le troisième piston (5).

6. Système de freinage selon la revendication 5, **caractérisé en ce que** le troisième piston (5) est pourvu d'une saillie radiale (14) qui coopère pour transmettre les forces avec la surface frontale du corps de soupape (13), tournée vers l'interstice (11).

7. Système de freinage selon l'une des revendications 1 à 4, **caractérisé en ce que** le corps de soupape (13) peut être actionné par un levier ou barre transversale (31) coopérant avec le troisième piston (5), monté dans le boîtier (8) et disposé de préférence perpendiculairement à l'axe longitudinal du troisième piston (5).

8. Système de freinage selon l'une des revendications 1 à 7, **caractérisé en ce que** la source de pression hydraulique (9) est formée par un accumulateur haute pression (19) qui peut être chargé par un groupe motopompe (20).

9. Système de freinage selon l'une des revendications 1 à 8, **caractérisé en ce qu'**il est prévu un deuxième dispositif à soupape (15, 16) qui peut être actionné électriquement au moyen d'une unité de commande électronique, dispositif à soupape par lequel la pression à introduire dans l'interstice (11) peut être influencée et qui est intégrée dans le boîtier (8).

10. Système de freinage selon l'une des revendications 1 à 9, **caractérisé en ce qu'**il est prévu un capteur de pression (39) pour surveiller l'état de charge de l'accumulateur haute pression (19), dont le signal de sortie est amené à l'unité de commande électronique et qui est intégré dans le boîtier (8) ou est relié à celui-ci par complémentarité de formes.

11. Système de freinage selon l'une des revendications 1 à 10, **caractérisé en ce qu'**il est prévu un capteur de pression (18) pour détecter la pression régnant dans l'interstice (11), dont le signal de sortie est amené à l'unité de commande électronique et qui est intégré dans le boîtier (8) ou relié à celui-ci par complémentarité de formes.

12. Système de freinage selon au moins la revendication 8, **caractérisé en ce que** l'accumulateur haute pression (19) est disposé directement sur le boîtier (8), une liaison hydraulique (23) étant formée entre le côté refoulement d'une pompe (27) du groupe motopompe (20) et l'accumulateur haute pression (19), par au moins un alésage prévu dans le boîtier (8).

13. Système de freinage selon la revendication 12, **caractérisé en ce que** dans la liaison hydraulique (23) est inséré un clapet de non-retour (24) s'ouvrant vers l'accumulateur haute pression (19).

14. Système de freinage selon l'une des revendications précédentes, **caractérisé en ce qu'**au cylindre de frein principal (1) est raccordée une unité électrohydraulique de commande ou de régulation (28) d'un système de régulation d'antiblocage (ABS).

15. Système de freinage selon la revendication 14, **caractérisé en ce que** l'unité électrohydraulique de commande ou de régulation (28) fonctionne suivant le principe de refoulement et comporte un équipement (30) pour refouler le volume de fluide sous pression excédentaire dans le cylindre de frein principal (1).

16. Système de freinage selon au moins les revendications 8 et 14, **caractérisé en ce que** le groupe motopompe (20) est intégré dans l'unité électrohydraulique de commande ou de régulation (28).

17. Système de freinage selon la revendication 16, **caractérisé en ce que** la pompe (27) est alimentée en fluide sous pression à la pression atmosphérique par une première liaison hydraulique (50), disposée entre le boîtier (8) et l'unité de commande ou de régulation (28), et le fluide sous pression, fourni par la pompe (27) sous haute pression, est acheminé, par une seconde liaison hydraulique (51) disposée entre l'unité de commande ou de régulation (28) et le boîtier (8), vers un segment (52), s'étendant à l'intérieur du boîtier (8) et menant à l'accumulateur haute pression (19), de la liaison hydraulique (23).

18. Système de freinage selon la revendication 17, **caractérisé en ce qu'**un clapet de non-retour, s'ouvrant vers l'accumulateur haute pression (19), est inséré à l'intérieur du segment (52).

19. Système de freinage selon la revendication 17, **caractérisé en ce qu'**à l'intérieur du segment (52) est insérée une soupape (25) à commande électrique, de préférence une soupape à 2/2 voies, qui dans une première position de commutation assure la fonction d'un clapet de non-retour s'ouvrant vers l'accumulateur haute pression (19), et dans une seconde position de commutation, ouvre la liaison hydraulique (51).

20. Système de freinage selon la revendication 15, **caractérisé en ce que** l'équipement (30) pour refouler un volume de fluide sous pression excédentaire peut être entraîné par la pression appliquée par le groupe motopompe (9).

21. Système de freinage selon la revendication 15, **caractérisé en ce que** l'équipement (30) pour refouler un volume de fluide sous pression excédentaire peut être entraîné aussi bien par la pression appliquée par le groupe motopompe (20) que par la pression régnant dans l'accumulateur haute pression (19).

22. Système de freinage selon la revendication 20 ou 21, **caractérisé en ce que** l'équipement (30) est formé par au moins deux accumulateurs basse pression (30a, b ; 40a, b) qui alternativement reçoivent un volume de fluide sous pression se formant ou refoulent le volume de fluide sous pression formé, au sens d'un retour, par l'action de la pression d'entraînement.

23. Système de freinage selon la revendication 8 et l'une des revendications 20 à 22 précédentes, **caractérisé en ce que** le groupe motopompe (20) ou l'accumulateur haute pression (19) coopère, en combinaison avec la soupape (25) à commande électrique, avec un dispositif à soupape (22) qui fournit alternativement la pression d'entraînement ou la pression atmosphérique pour l'accumulateur basse pression (30a, b ; 40a, b).

24. Système de freinage selon la revendication 23, **caractérisé en ce que** l'agencement de soupapes (29) est intégré dans l'unité électrohydraulique de commande ou de régulation (28).

25. Système de freinage selon l'une des revendications précédentes, **caractérisé en ce que** le dispositif de simulation de caractéristique de pédale de frein contient au moins un élément élastique (6, 7) qui exerce une composante "force de ressort" de la force de simulateur, qui dépend de la course relative entre le premier piston (2) et le troisième piston (5).

26. Système de freinage selon la revendication 25, **caractérisé en ce que** le dispositif de simulation de caractéristique de pédale de frein contient au moins un dispositif d'amortissement qui exerce une composante "force d'amortissement" de la force de simulateur, qui dépend de la vitesse relative entre le premier piston (2) et le troisième piston (5).

27. Système de freinage selon la revendication 25 ou 26, **caractérisé en ce que** le dispositif de simulation de caractéristique de pédale de frein (6, 7) contient au moins l'un des composants "ressort en acier, corps élastomère et liaison de friction" exerçant la force de simulateur.

28. Système de freinage selon l'une des revendications 25 à 27, **caractérisé en ce que** le dispositif de simulation de caractéristique de pédale de frein (6, 7) peut être bloqué de manière qu'à l'état bloqué il empêche un mouvement du premier piston (2), allant au-delà des positions de piston existantes, par rapport au troisième piston (5), dans le sens d'actionnement.

29. Système de freinage selon la revendication 28, **caractérisé en ce que** le blocage du dispositif de simulation de caractéristique de pédale de frein (6, 7) s'effectue en fonction de la course relative du troisième piston (5) par rapport au boîtier (8).

30. Système de freinage selon la revendication 29, **caractérisé en ce que** le dispositif de simulation de caractéristique de pédale de frein coopère avec une chambre hydraulique (21) limitée par le premier piston (2) dans le troisième piston (5), laquelle est en liaison, par une autre liaison hydraulique (50), avec un réservoir de fluide sous pression (22) hors pression, et qui peut être fermée par un mouvement relatif du troisième piston (5) par rapport au boîtier (8).

31. Système de freinage selon l'une des revendications 25 à 27, **caractérisé en ce que** le dispositif de simulation de caractéristique de pédale de frein (6, 7) peut être bloqué de manière qu'à l'état bloqué il empêche un mouvement du premier piston (2), allant au-delà des positions de piston existantes, par rapport au deuxième piston (4), dans le sens d'actionnement.

32. Système de freinage selon la revendication 29, **caractérisé en ce que** le dispositif de simulation de caractéristique de pédale de frein coopère avec une chambre hydraulique (42, 43, 44, 45), limitée par le premier piston (2) dans le troisième piston (5) ainsi que dans le deuxième piston (4), laquelle est en liaison avec le réservoir de fluide sous pression (22) hors pression, et qui peut être fermée par un mouvement relatif du troisième piston (5) par rapport au boîtier (8).

33. Système de freinage selon l'une des revendications 30 à 32, **caractérisé en ce qu'**un amortissement ou au moins une partie de l'amortissement du dispositif de simulateur de caractéristique de pédale de frein (6, 7) est obtenu par un dimensionnement approprié d'une liaison hydraulique (50) entre la chambre hydraulique (42, 43, 44, 45) et le réservoir de fluide sous pression (22) hors pression.

34. Système de freinage selon la revendication 33, **caractérisé en ce que** l'amortissement du dispositif de simulation de caractéristique de pédale de frein (6, 7) est obtenu par un dispositif d'amortissement hydraulique, inséré dans la liaison hydraulique (50).

35. Système de freinage selon la revendication 34, **caractérisé en ce que** le dispositif d'amortissement contient des diaphragmes hydrauliques et présente une caractéristique d'amortissement qui dépend du sens d'écoulement.

36. Système de freinage selon l'une des revendications 27 à 35, **caractérisé en ce que** les composants, exerçant la force de simulateur, sont disposés chacun soit à l'extérieur, soit à l'intérieur de la chambre hydraulique (21).
